# EUROPEAN PATENT SPECIFICATION

(11) **EP 1 929 595 B1**
(45) Date of publication and mention of the grant of the patent: **03.11.2010**
(21) Application number: 06804111.0
(22) Date of filing: 25.09.2006
(51) Int. Cl.: H01S 3/097, H01S 3/038, H01S 3/22

(54) **THERMAL-EXPANSION TOLERANT, PREIONIZER ELECTRODE FOR A GAS DISCHARGE LASER**
WÄRMEAUSDEHNUNGSTOLERANTE VORIONISIERERELEKTRODE FÜR EINEN GASENTLADUNGSLASER
ELECTRODE DE PRE-IONISATION TOLERANT UNE EXPANSION THERMIQUE POUR LASER A DECHARGE GAZEUSE

(30) Priority: 27.09.2005 US 237535
(43) Date of publication of application: 11.06.2008
(73) Proprietor: Cymer, Inc. (A Nevada Corporation), San Diego, CA 92127 (US)
(72) Inventor: STEIGER, Thomas, D., San Diego, CA 92128 (US); UJAZDOWSKI, Richard, C., Poway, CA 92064 (US)
(74) Representative: Grünecker, Kinkeldey, Stockmair & Schwanhäusser Anwaltssozietät
(86) International application number: PCT/US2006/037225
(87) International publication number: WO 2007/038412

(56) References cited:
- EP-A- 0 798 823
- EP-A- 1 107 401
- WO-A-00/60708
- GB-A- 2 174 755
- US-A- 5 331 810
- US-A- 5 337 330
- US-A- 5 337 330
- US-A- 6 067 003
- US-B1- 6 522 679
- US-B1- 6 522 679
- US-B1- 6 650 679
- US-B1- 6 650 679
- US-B2- 6 774 566
- US-B2- 6 937 635
- US-B2- 6 937 635

## Description

### FIELD OF THE INVENTION

The present invention relates to pulsed, gas discharge lasers. The present invention is particularly, but not exclusively useful as a gas discharge laser having a corona discharge preionizer to reduce discharge instabilities.

### BACKGROUND OF THE INVENTION

US 6,937,635 B2 discloses a gas discharge laser having at least one long-life elongated electrode for producing at least 12 billion high voltage electric discharges in a fluorine containing laser gas. In a preferred embodiment at least one of the electrodes is comprised of a first material having a relatively low anode erosion rate and a second anode material having a relatively higher anode erosion rate. The first anode material is positioned at a desired anode discharge region of the electrode. The second anode material is located adjacent to the first anode material along at least two long sides of the first material. During operation of the laser erosion occurs on both materials but the higher erosion rate of the second material assures that any tendency of the discharge to spread onto the second material will quickly erode away the second material enough to stop the spread of the discharge. In a preferred embodiment the anode is as described above and the cathode is also a two-material electrode with the first material at the discharge region being C26000 brass and the second material being C36000 brass. A pulse power system provides electrical pulses at rates of at least 1 kH3. A blower circulates laser gas between the electrodes at speeds of at least 5 m/s and a heat exchanger is provided to remove heat produced by the blower and the discharges.

EP 1 107 401 A1 discloses that to reduce the cross-sectional area of a discharge circuit loop in the excitation circuit of a gas laser device that discharges ultraviolet rays, thereby reducing the inductance and enhancing the laser oscillation efficiency, the gas laser device is provided with a laser chamber in which laser gas is sealed and which has a circulation means that circulates the laser gas within the chamber, a pair of main discharge electrodes disposed at a prescribed separation within said laser chamber, a discharge circuit having peaking capacitors that are connected in parallel with the pair of main discharge electrodes and a preionization unit in which a first electrode and a second electrode are disposed facing each other with a dielectric interposed between them, the preionization unit; being disposed running along each side of one of the main discharge electrodes, that one of the main discharge electrodes and the peaking capacitors being connected via a conduction member that passes between the one of the main discharge electrodes and the preionization unit.

US 6,522, 679 B1 discloses a gas laser discharge unit. The discharge unit includes an elongated electrode plate having a plurality of spaced-apart holes therein and a plurality of coaxial high voltage ducts. Each duct extends through one of the holes in the electrode plate and includes a central conductive core and an insulator element arranged around the core to electrically insulate said core from the electrode plate. An elongated high voltage electrode is electrically connected to the cores of the ducts. In addition, an elongated ground electrode is positioned to oppose the high voltage electrode and form a gas discharge gap therebetween. The ground electrode is electrically connected to the electrode plate. The gas laser discharge unit may be removably mounted as a module into a gas laser tube, such as an excimer laser tube.

US 5,337,330 discloses an anode and a cathode in a laser, which are spaced in a first direction. A voltage difference between these members produces an electrical discharge which ionizes gases in the laser to react chemically and produce coherent radiation. First and second tubes made from a dielectric material are spaced in the laser in a second direction transverse (preferably perpendicular) to the first direction. The anode, the cathode and the tubes extend through the laser in a direction transverse (preferably perpendicular) to the first and second directions. The tubes are preferably at least a 99.9% pure polycrystalline aluminum oxide ceramic with traces of other metallic elements than aluminum. Bushings made from a material homogeneous (preferably identical) to the tube material are integral with the tube near the opposite tube ends. First electrical conductors extend through the tubes. Second electrical conductors (preferably resilient) contact (preferably line contact) the external tube surfaces to define capacitors with the first conductors and the tube material. Positioning members movably engage the tube external surfaces near the tube ends in co-operation with the resilient members establishing three (3)- line contacts with the tubes for positioning the tubes precisely in the cavity. When a voltage pulse is applied between the first conductor inside each tube and the conductors on such tube, the resultant corona discharge from the external tube surface produces ultraviolet light which pre-ionizes the gases in the cavity. This facilitates the ionization of the gases in the cavity when an anode-cathode electrical discharge is produced.

WO 00/60708 discloses an excimer or molecular fluorine laser, which includes one or more sliding surface discharge preionization units each including an elongated preionization electrode spaced from one or more associated preionization electrodes by an elongated dielectric within the discharge chamber. The dielectric includes a sliding discharge surface at a long axis, or side, surface of its cross-section substantially facing the discharge volume of the laser. A portion of each of the elongated and associated preionization electrodes conductively contacts a surface of the dielectric portion preferably at a cross-sectional short axis, or top or bottom, side of the dielectric. A significant area of the surface of at least one, and preferably both, of the elongated and associated electrodes contacts the corresponding surface of the dielectric such that the contact area is substantially larger than the area of the sliding discharge surface. Moreover, the sliding surface is preferably oriented and positioned such that generated UV radiation illuminates the laser gas at a substantially central location of the discharge volume.

EP 0 798 823 A1 discloses an anode and an a cathode in a gas laser, such as an excimer laser, which are spaced in a first direction. A voltage difference between these members produces an electrical discharge which ionizes gasses in the laser to react chemically and produce coherent radiation. First and second tubes made from a dielectric material are designed by utilizing a constant, larger tube diameter with thicker tube walls. These first and second tubes extend through the laser in a second direction transverse (preferably perpendicular) to the first direction. The anode, the cathode and the tubes extend through the laser in a direction transverse to the first and second directions. The use of a thicker walled, large tube of constant diameter allows the use of a commercial grade polycrystalline aluminum oxide ceramic, rather than ultra pure ceramics. Bushings having anti-tracking grooves incorporated therein are truly integral with the tube, in that they are directly machined at each end of the tube, making the tubes easier and less costly to manufacture. The tube's larger diameter provides a greater surface area for the generation of photons, thereby creating a greater preionizing effect than conventional designs.

US 5,331,810 discloses a low thermal capacitance exhaust pipe has a plurality of sections connected by an expansion joint to relieve thermal stress.

GB 2 174 755 A discloses a manifold that comprises a collector, a plurality of conduits each connecting an exhaust port from a cylinder to the collector. Each conduit includes a thermal expansion joint to permit differential thermal expansion between the engine body and the substantially hotter exhaust conduit. The expansion joint is formed by overlapping portions of conduit sections, which include axial as well as radial clearances therebetween for thermal expansion. In the event that the engine is to be turbocharged, the manifold can be covered with a thermal blanket to prevent heat loses from the exhaust system. In such a case, the expansion joint includes a resilient seal member between the overlapping pipe portions which seals the conduit sections to each other despite substantially similar thermal growth in each of the insulated blanketed conduit sections.

US 6,650,679 discloses a gas laser discharge unit. The discharge unit includes an elongated electrode plate having a plurality of spaced-apart holes therein and a plurality of coaxial high voltage ducts. Each duct extends through one of the holes in the electrode plate and includes a central conductive core and an insulator element arranged around the core to electrically insulate said core from the electrode plate. An elongated high voltage electrode is electrically connected to the cores of the ducts. In addition, an elongated ground electrode is positioned to oppose the high voltage electrode and form a gas discharge gap therebetween. The ground electrode is electrically connected to the electrode plate. The gas laser discharge unit may be removably mounted as a module into a gas laser tube, such as an excimer laser tube.

In the absence of preionization, gas discharge pulsed lasers such as ArF, XeF and KrF excimer lasers and molecular fluorine lasers are generally unstable. In particular, without preionization, the glow discharge that is required for suitable laser emission does not occur. On the other hand, preionization which results in a uniform distribution of electrons in the gas discharge region immediately before the main gas discharge occurs can be used to produce high quality, consistent laser pulses.

Early attempts at preionization included the use of spark preionization which created a high current, localized, intense spark which had the undesirable effect of vaporizing electrode material and consuming and contaminating the active laser gas. More recently, non-sparking corona discharge preionization has been developed and employed to create a substantially uniform emission of radiation which typically includes UV and X-ray wavelengths. Corona discharge producing a uniform preionization can result in a good beam profile without hot spots, high energy stability, improved electrode lifetimes and reduced halogen consumption. In one such method, a corona discharge is produced by establishing a potential difference across a dielectric material.

In more geometrical terms, a typical gas discharge laser may employ a pair of spaced apart, elongated (e.g. 60cm long) main discharge electrodes to initiate lasing in a gaseous material. A blower may be provided to circulate a laserable gaseous medium past the electrodes to quickly exhaust gas from the discharge region after a pulse and present a fresh portion of gas to the electrodes for the next pulse. Thus, a rather large elongated, somewhat rectangular discharge volume of fresh gaseous media is required to be uniformly preionized, immediately prior to a discharge between the main electrodes.

For the above described geometry, an effective way to create a substantially uniform preionization generally involves the use of an elongated tube made of dielectric material that is aligned parallel to the discharge electrodes and positioned near the discharge region. A conductive preionization electrode (typically made of copper or brass), can then be placed in the bore of the tube and used to create a potential difference between the preionization electrode and one of the main discharge electrodes. This potential difference extends across the dielectric tube radially and results in a substantially uniform emission of photons that are emitted from the outer surface of the tube.

In one arrangement, an aluminum chamber housing is employed that envelops the gaseous media and the discharge region. Each end of the preionization electrode is then mechanically, and in some cases, electrically connected to the housing, which is then grounded. Thus, a potential difference between the preionization electrode and a main electrode is established when the main electrode is biased relative to ground.

An important factor that must be considered when designing a preionization system is the response of the various preionization structures to heat generated in the laser chamber. With the above described structure, one primary failure mode has been identified as the cracking of the relatively brittle dielectric tube due to thermal expansion of the brass / copper preionization electrode. In particular, both of these materials have a relatively high linear thermal expansion coefficient (LTEC) (i.e. the fractional change in length of a bar per degree of temperature change). For example, Brass has an LTEC, of about 19 x 10⁻⁶ per degree Celsius and Copper has a LTEC of about 17 x 10⁻⁶ per degree Celsius, as compared to aluminum which has an LTEC. of about 23 x 10⁻⁶ per degree Celsius. In operation, the preionization electrode is typically heated to a higher temperature than the aluminum housing, and as a consequence, the preionization electrode may expand much more than the stainless steel housing upon exposure to heat, and this expansion differential may cause the electrode to bow and crack the dielectric tube.

With the above considerations in mind. Applicants disclose preionization systems and methods for providing a substantially uniform preionization volume while accommodating the heat generated in the laser chamber.

### SUMMARY OF THE INVENTION

A corona discharge preionizer assembly for a gas discharge laser according to the present invention comprises the features defined in claim 1. Various embodiments of the present invention can comprise the features defined in the dependent claims.

### BRIEF DESCRIPTION OF THE DRAWINGS

Fig. 1 shows a cross-sectional view of a gas discharge laser chamber taken transverse to a laser axis;
Fig. 2 shows a cross-sectional view of a portion of a preionization system having a preionization electrode that includes two elongated conductive members;
Fig. 3 shows a full length side view of a first conductive member for use in the electrode shown in system shown in Fig. 2;
Fig. 4 shows a full length side view (in partial cross-section) of a second conductive member for use in the electrode shown in system shown in Fig. 2;
Fig. 5 shows a cross-sectional view of an example of a preionization system having a preionization electrode that includes two elongated conductive members with each member having a substantially flat end;
Fig. 6 shows a cross-sectional view of a portion of another embodiment of a preionization system having a preionization electrode that includes two elongated conductive members with one member having a concave end and the other member having a convex end; and
Fig. 7 shows a cross-sectional view of a portion of an example of a preionization system having a preionization electrode that includes two elongated conductive members with each member having rounded edges.

### DETAILED DESCRIPTION OF PREFERRED EMBODIMENTS

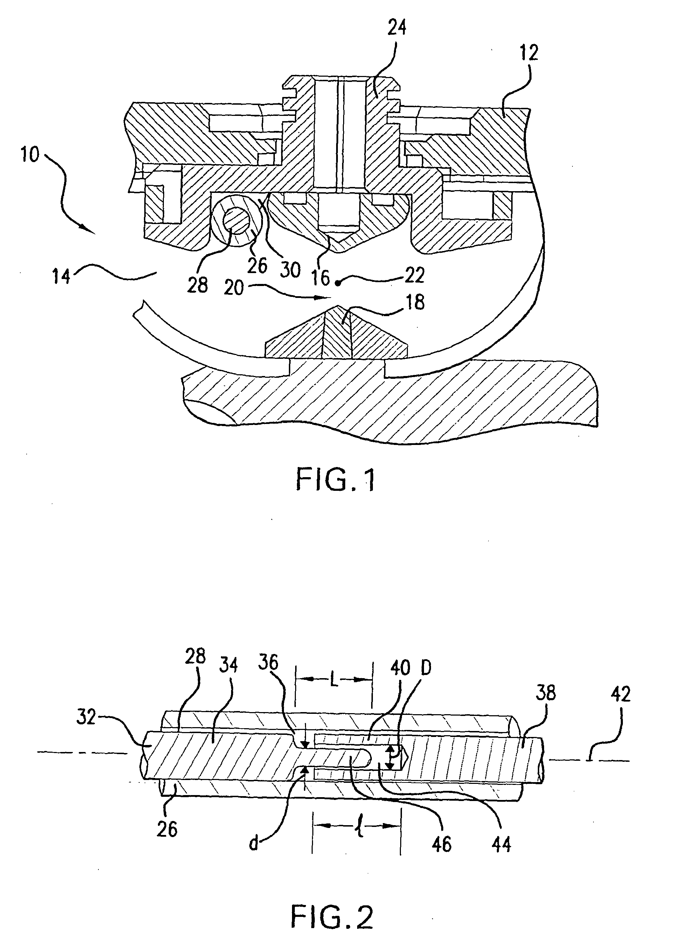

Referring initially to Fig. 1, a gas discharge chamber for a pulsed laser, such as a KrF excimer laser, an XeF excimer laser, an ArF excimer laser or molecular fluorine laser, is shown and generally designated 10. The chamber 10 typically includes a chamber housing 12 that may be made of a relatively strong, corrosion resistant material, e.g. nickel-plated aluminum, and is generally rectangular in construction with closed ends. With this structure, the housing 12 may surround a volume 14 which holds a laserable gas medium.

The chamber 10 may also include a gas discharge system having two elongated spaced apart electrodes 16, 18, one of which may be designated a cathode and the other an anode. With this arrangement, a gas discharge region 20 is established in the space between electrodes 16, 18 and includes the laser's beam axis 22 which extends substantially nominal to the page for the chamber 20 shown in Fig. 1. Each electrode 16, 18 may be elongated, for example, to a length of about 40-80cm and aligned in a direction generally parallel to the axis 22. Thus, the gas discharge region 20 for the chamber 10 shown is an elongated volume having a length approximating the length of the electrodes 16. 18 (i.e. 40-80cm) and a somewhat rectangular cross section, which may be, for example. 3mm wide by about 12mm in the direction of electrode spacing for an ArF excimer laser. As shown, electrical contact between the electrode 16 and housing 12 is prevented by main insulator 24 which may be made from a dielectric, e.g. ceramic material. In one implementation, electrode 18 is maintained at a constant reference potential, e.g. ground potential, and electrode 16 can be biased relative to the reference potential to initiate an electric discharge in the gas discharge region 20. It is to be appreciated that other biasing schemes are possible.

Fig. 1 also shows that the chamber 10 also includes a preionization system having a hollow, dielectric tube 26, preionization electrode 28 and a conductive shim 30, which is not required for all embodiments. Fig. 2 shows that the preionization electrode 28 may include an elongated conductive member 32 having an end 34 that is disposed within the bore 36 of the dielectric tube 26, and an elongated conductive member 38 having an end 40 that is disposed within the bore 36 of the dielectric tube 26. Also shown, members 32, 38 are aligned along a common axis 42 within the tube 26. At least one, and typically both of the members 32, 38 are disposed in the bore 36 of the tube 26 such that the member 32. 38 is able to move axially relative to the tube 26. For the preionization system, the members 32. 34 may be made from a conductive material such as brass or copper and the dielectric tube 26 may be made of a ceramic.

Fig. 2 further illustrates that the end 34 of the member 32 is axially spaced from the end 40 of the member 38 allowing axial movement of member 32 relative to member 38. for example, during thermal expansion of one or both of the members 32, 38. For the embodiment shown in Fig. 2. the end 40 of the member 38 is formed with a substantially cylindrical shaped opening 44 that is substantially aligned with axis 42. In addition, for this embodiment, the end 34 of the member 32 is formed with a substantially cylindrical shaped projection 46. In terms of relative proportions, for the structure shown, the opening 44 has an inner diameter, D, and the projection 46 has an outer diameter, d, with d < D to allow the projection 46 to fit inside and move within the opening 44. It is to be appreciated that incidental contact between the end 34 and end 40 may occur while maintaining an axial space to accommodate axial expansion. Exemplary length dimensions for the opening 44 and projection 46 may include, for example, L = 1.1cm and 1= 1.0cm. With this cooperation of structure, as characterized by the axial overlap of the first and second members 30, 32 at the respective ends 34, 40, a relatively uniform preionization emission may be obtained near the ends 34, 40 of the members 30, 32.

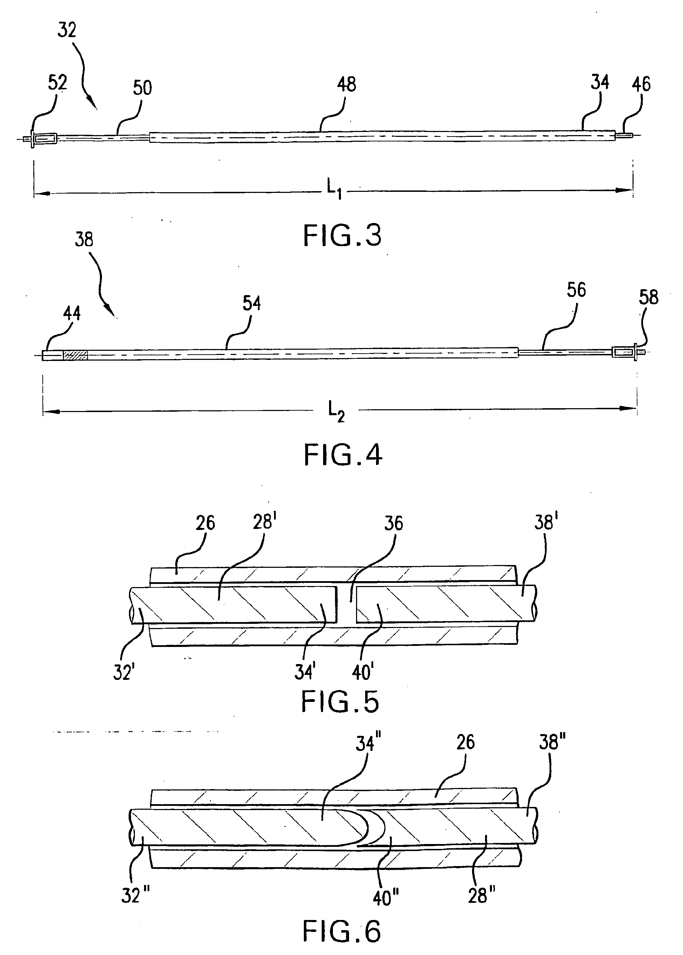

Fig. 3 shows the full length of the member 32. As shown there, the member 32 includes a substantially cylindrical, rod portion 48 (having an outer diameter slightly less than the inner diameter of the tube 26) and a projection 46 which extends therefrom at end 34. The member 32 may also include a portion 50 having a reduced section (relative to the rod portion 48) to reduce arcing and a flange 52 for mounting the member 32 to a housing wall (not shown). The member 32 may have an overall length, L₁, of about 34cm for use with an electrode 16 having a length of about 57cm.
Fig. 4 shows the full length of the member 38. As shown there, the member 38 includes a substantially cylindrical, rod portion 54 (having an outer diameter slightly less than the inner diameter of the tube 26) and an opening 44 which is formed at end 40. The member 38 may also include a portion 56 having a reduced section (relative to the rod portion 54) to reduce arcing and a-flange 58 which may mate with the dielectric tube 26 to prevent rotation. The member 38 may have an overall length, L₂, of about 33.5cm for use with an electrode 16 having a length of 57 cm.
Fig. 5 shows an example of a preionization system having a preionization electrode 28' that includes an elongated conductive member 32' having a.substantially flat end 34' that is disposed within the bore 36 of the dielectric tube 26. The electrode 28' also may include an elongated conductive member 38' having a substantially flat end 40' that is disposed within the bore 36 of the dielectric tube 26 and axially spaced from the end 34' of member 32'. This axial spacing allows for thermal expansion of the members 32', 38' without cracking the dielectric tube 26.
Fig. 6 shows another embodiment of a preionization system having a preionization electrode 28" that includes an elongated conductive member 32" having a substantially concave end 34" that is disposed within the bore 36 of the dielectric tube 26. The electrode 28" also may include an elongated conductive member 38" having a substantially convex end 40" that is disposed within the bore 36 of the dielectric tube 26 and axially spaced from the .end 34" of member 32". This axial spacing allows for thermal expansion of the members 32", 38" without cracking the dielectric tube 26.

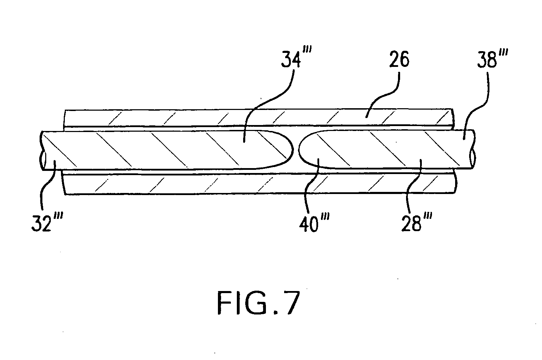

Fig. 7 shows an example of a preionization system having a preionization electrode 28"' that includes an elongated conductive member 32"' having a rounded end 34"' that is disposed within the bore 36 of the dielectric tube 26. The electrode 28"' also may include an elongated conductive member 38"' having a rounded end 40"' that is disposed within the bore 36 of the dielectric tube 26 and axially spaced from the end 34"' of member 32"'. This axial spacing allows for thermal expansion of the members 32"', 38"' without cracking the dielectric tube 26.

### OPERATION

Referring back to Fig. 1, in operation, a voltage difference is applied radially across the dielectric tube 26 to establish a pre-ionization emission prior to a discharge between main electrode 16 and main electrode 18. This voltage potential can be effectuated in one of several different ways. For example, a potential difference may be established between the preionization electrode 28 and a conductive shim 30. For this case, both members 32, 38 are typically held at a same voltage potential. As shown, the conducting shim 30 may be positioned between the tube 26 and main insulator 24 and may be elongated to extend substantially along the length of the dielectric tube 26. The conducting shim 30 may or may not be in electrical contact with the electrode 16. In some implementations, the members 32, 38 are electrically connected to the housing 12, which in turn, is connected to a reference potential, e.g. ground. The conducting shim 30 and / or one of the electrodes 16, 18 may then be biased relative to the reference potential to establish the voltage difference across the tube 26.

It will also be understood that, while only one preionization tube 26 is shown positioned upstream of the discharge electrodes 16, 18, other arrangements may be equally suitable depending on the application. For example, a preionization tube 26 may be positioned downstream of the discharge electrodes 16, 18 or a pair of preionization tubes 26 may be used, with one positioned upstream and the other positioned downstream of the discharge electrodes 16,18.

It will be understood by those skilled in the art that the aspects of embodiments of the present invention disclosed above are intended to be preferred embodiments only and not to limit the disclosure of the present invention in any way and particularly not to a specific preferred embodiment alone. Many chances and modification can be made to the disclosed aspects of embodiments of the disclosed invention that will be understood and appreciated by those skilled in the art.

## Claims

1. A corona dischage preionizer assembly for a gas discharge laser, said assembly comprising:
- a dielectric tube (26) defining a tube bore (36); and
- an electrode (28, 28");
**characterized in that**
said electrode (28) comprises:
- a first elongated conductive member (38, 38"), said first member (38, 38") having a first end portion (40, 40") and a second end with said first end portion (40, 40") of said first member (38, 38") disposed in said bore (36) of said tube (26); and
- a second elongated conductive member (32, 32"), said second mber (32, 32") having a first end portion (34, 34") and a second end portion with said first end portion (34, 34") of said second member (32, 32") disposed in said bore and wherein said first and second conductive members (32, 38, 32", 38") are held at a same voltage potential,
- wherein at least a portion of each of said first member (38, 38") and said second member (32, 32") is formed as a rod, and said first end portion (34, 34") of said second member (32, 32") is formed with a projection (46) disposed in an opening (44) or cavity formed at said first end portion (40, 40") of said first member (38, 38").

2. A preionizer assembly as recited in claim 1 wherein said at least a portion of said first member (38) defines a preionizer longitudinal axis (42) and said first end portion (40) of said first member (38) is formed with a cylindrical shaped opening (44) having its axis aligned with said preionizer longitudinal axis (42).

3. A preionizer assembly as recited in claim 2 wherein said cylindrical shaped opening (44) has an inner diameter, D, and wherein said projection (46) of said second member (32) is cylindrical shaped and has an outer diameter, d, with d < D.

4. A preionizer assembly as recited in claim 1 wherein said first (38) and second (32) members are electrically connected to a gas discharge chamber housing (12).

5. A preionizer assembly as recited in claim 1 wherein said first end portion (40") of said first member (38") is formed with a cavity having a concave inner surface and wherein said projection of said second member (32") has a convex outer surface.

6. A preionizer assembly as recited in claim 1 wherein said tube (26) is made of a ceramic material and said electrode (28, 28") is made of a brass.

7. A preionizer assembly as recited in claim 1 wherein said dielectric tube (26) has an outer surface and said assembly further comprises a conductor for connecting said outer surface to a discharge electrode of the gas discharge laser.

8. A gas discharge laser comprising:
- a chamber housing (12):
- a first elongated discharge electrode (16) defining a first elongated discharge electrode longitudinal axis;
- a second elongated discharge electrode (18) spaced from said first electrode (16) the axis of said second elongated discharge electode being aligned parallel to said first elongated discharge electrode longitudinal axis;
- a gaseous laser medium within said housing (12);
- a voltage source for establishing a potential difference between said first (16) and second (18) discharge electrodes to excite said gas medium; and
- a preionizer assembly according to any of claims 1 to 7.

9. A preionizer assembly as recited in claim 1, further comprising:
a voltage source establishing a potential difference between said electrode (28, 28") and a location on an outer tube surface of said dielectric tube (26) to generate photons.

## Patentansprüche

1. Koronaentladungs-Vorionisatoranordnung für einen Gasentladungslaser, wobei die Anordnung umfasst:
eine dielektrische Röhre (26), die eine Röhrenbohrung (36) aufweist; und
eine Elektrode (28, 28");
**dadurch gekennzeichnet, dass**
die Elektrode (28) umfasst:
ein erstes längliches leitendes Element (38, 38"), wobei das erste Element (38, 38") einen ersten Endabschnitt (40, 40") und ein zweites Ende hat, und der erste Endabschnitt (40, 40") des ersten Elementes (38, 38") in der Bohrung (36) der Röhre (26) angeordnet ist; und
ein zweites längliches leitendes Element (32, 32"), wobei das zweite Element (32, 32") einen ersten Endabschnitt (34, 34") und einen zweiten Endabschnitt hat, und der erste Endabschnitt (34, 34") des zweiten Elementes (32, 32") in der Bohrung angeordnet ist und das erste sowie das zweite leitende Element (32, 38, 32", 38") auf ein und demselben Spannungspotenzial gehalten werden,
wobei wenigstens ein Abschnitt des ersten Elementes (38, 38") und des zweiten Elementes (32, 32") jeweils als eine Stange ausgebildet ist und der erste Endabschnitt (34, 34") des zweiten Elementes (32, 32") mit einem Vorsprung (46) versehen ist, der in einer Öffnung (44) oder einem Hohlraum angeordnet ist, der an dem ersten Endabschnitt (40, 40") des ersten Elementes (38, 38") ausgebildet ist.

2. Vorionisatoranordnung nach Anspruch 1, wobei wenigstens ein Abschnitt des ersten Elementes (38) eine Vorionisator-Längsachse (42) definiert und der erste Endabschnitt (40) des ersten Elementes (38) mit einer zylindrisch geformten Öffnung (44) versehen ist, deren Achse mit der Vorionisator-Längsachse (42) fluchtend ist.

3. Vorionisator-Anordnung nach Anspruch 2, wobei die zylindrisch geformte Öffnung (44) einen Innendurchmesser D hat und der Vorsprung (46) des zweiten Elementes (32) zylindrisch geformt ist und einen Außendurchmesser d hat, wobei d < D.

4. Vorionisator-Anordnung nach Anspruch 1, wobei das erste (38) und das zweite (32) Element elektrisch mit einem Gasentladungskammer-Gehäuse (12) verbunden sind.

5. Vorionisator-Anordnung nach Anspruch 1, wobei der erste Endabschnitt (40") des ersten Elementes (38") mit einem Hohlraum versehen ist, der eine konkave Innenfläche hat, und der Vorsprung des zweiten Elementes (32") eine konvexe Außenfläche hat.

6. Vorionisator-Anordnung nach Anspruch 1, wobei die Röhre (26) aus einem keramischen Material besteht und die Elektrode (28, 28") aus Messing besteht.

7. Vorionisator-Anordnung nach Anspruch 1, wobei die dielektrische Röhre (26) eine Außenfläche hat und die Anordnung des Weiteren einen Leiter zum Verbinden der Außenfläche mit einer Entladungselektrode des Gasentladungslasers umfasst.

8. Gasentladungslaser, der umfasst:
ein Kammergehäuse (12);
eine erste längliche Entladungselektrode (16), die eine Längsachse der ersten länglichen Entladungselektrode definiert;
eine zweite längliche Entladungselektrode (18), die von der ersten Elektrode (16) beabstandet ist, wobei die Achse der zweiten länglichen Entladungselektrode parallel zu der Längsachse der ersten länglichen Entladungselektrode ausgerichtet ist;
ein gasförmiges Laser-Medium in dem Gehäuse (12);
eine Spannungsquelle, mit der eine Potenzialdifferenz zwischen der ersten (16) und
der zweiten (18) Entladungselektrode hergestellt wird, um das Gas-Medium anzuregen; und
eine Vorionisator-Anordnurig nach einem der Ansprüche 1 bis 7.

9. Vorionisator-Anordnung nach Anspruch 1, die des Weiteren umfasst:
eine Spannungsquelle, die eine Potenzialdifferenz zwischen der Elektrode (28, 28") und einer Position an einer äußeren Röhrenfläche der dielektrischen Röhre (26) herstellt, um Photonen zu erzeugen.

## Revendications

1. Ensemble formant dispositif de préionisation à décharge par effet corona pour un laser à décharge de gaz, ledit ensemble comprenant :
- un tube diélectrique (26) définissant un alésage de tube (36) ; et
- une électrode (28, 28") ;
**caractérisé en ce que**
ladite électrode (28) comprend :
- un premier élément conducteur allongé (38, 38"), ledit premier élément (38, 38") présentant une première partie d'extrémité (40, 40") et une seconde extrémité, ladite première partie d'extrémité (40, 40") dudit premier élément (38, 38") étant disposée dans ledit alésage (36) dudit tube (26) ; et
- un second élément conducteur allongé (32, 32"), ledit second élément (32, 32") présentant une première partie d'extrémité (34, 34") et une seconde partie d'extrémité, ladite première partie d'extrémité (34, 34") dudit second élément (32, 32") étant disposée dans ledit alésage et dans lequel lesdits premier et second éléments conducteurs (32, 38, 32", 38") sont maintenus à un même potentiel de tension,
- dans lequel au moins une partie de chacun dudit premier élément (38, 38") et dudit second élément (32, 32") est formée comme une tige, et ladite première partie d'extrémité (34, 34") dudit second élément (32, 32") est formée avec une partie en saillie (46) disposée dans une ouverture (44) ou une cavité formée au niveau de ladite première partie d'extrémité (40, 40") dudit premier élément (38, 38").

2. Ensemble formant dispositif de préionisation selon la revendication 1, dans lequel ladite partie dudit premier élément (38) définit un axe longitudinal (42) de dispositif de préionisation et ladite première partie d'extrémité (40) dudit premier élément (38) est formée avec une ouverture de forme cylindrique (44) ayant son axe aligné sur ledit axe longitudinal (42) du dispositif de préionisation.

3. Ensemble formant dispositif de préconisation selon la revendication 2, dans lequel ladite ouverture de forme cylindrique (44) présente un diamètre intérieur, D, et dans lequel ladite partie en saillie (46) dudit second élément (32) est de forme cylindrique et présente un diamètre extérieur d, avec d < D.

4. Ensemble formant dispositif de préionisation selon la revendication 1, dans lequel lesdits premier (38) et second (32) éléments sont électriquement reliés à un logement de chambre de décharge de gaz (12).

5. Ensemble formant dispositif de préionisation selon la revendication 1, dans lequel ladite première partie d'extrémité (40") dudit premier élément (38") est formée avec une cavité présentant une surface intérieure concave et dans lequel ladite partie en saillie dudit second élément (32") présente une surface extérieure convexe.

6. Ensemble formant dispositif de préionisation selon la revendication 1, dans lequel ledit tube (26) est fait d'une matière céramique et ladite électrode (28, 28") est faite de laiton.

7. Ensemble formant dispositif de préionisation selon la revendication 1, dans lequel ledit tube diélectrique (26) présente une surface extérieure et ledit ensemble comprend en outre un conducteur pour relier ladite surface extérieure à une électrode de décharge du laser à décharge de gaz.

8. Laser à décharge de gaz comprenant :
- un logement de chambre (12) ;
- une première électrode de décharge allongée (16) définissant un axe longitudinal de première électrode de décharge allongée ;
- une seconde électrode de décharge allongée (18) espacée de ladite première électrode (16), l'axe de ladite seconde électrode de décharge allongée étant aligné parallèlement audit axe longitudinal de première électrode de décharge allongée ;
- un milieu laser gazeux à l'intérieur dudit logement (12) ;
- une source de tension pour établir une différence de potentiel entre lesdites première (16) et seconde (18) électrodes de décharge pour exciter ledit milieu gazeux ; et
- un ensemble formant dispositif de préionisation selon l'une quelconque des revendications 1 à 7.

9. Ensemble formant dispositif de préionisation selon la revendication 1, comprenant en outre :
une source de tension établissant une différence de potentiel entre ladite électrode (28, 28") et un emplacement sur une surface de tube extérieure dudit tube diélectrique (26) pour produire des photons.
